# EUROPEAN PATENT APPLICATION

(11) **EP 4 404 602 A1**
(43) Date of publication of application: **24.07.2024**
(21) Application number: 22869192.9
(22) Date of filing: 13.09.2022
(51) Int. Cl.: H04W 8/02, H04W 60/04

(54) **INFORMATION PROCESSING METHOD AND APPARATUS, TERMINAL, AND READABLE STORAGE MEDIUM**

(30) Priority: 15.09.2021 CN 202111081626
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Lavoix
(86) International application number: PCT/CN2022/118417
(87) International publication number: WO 2023/040823

(57) **Abstract**

This application discloses an information processing method and apparatus, a terminal, and a readable storage medium, and pertains to the field of communication technologies. The information processing method according to embodiments of this application includes: sending, by a terminal, a first message to a network-side device of a first network in a case that a first condition is satisfied, where the first message includes at least one of the following: a request message for mobility registration update, a request message for location update, and a message capable of triggering the network-side device to update a temporary terminal identifier for the terminal and including neither request message for mobility registration update nor request message for location update, and the first condition includes one of the following: the terminal needs to be assigned with a new temporary terminal identifier, and the terminal needs to change a temporary terminal identifier.

## Description

### CROSS-REFERENCE TO RELATED APPLICATIONS

This application claims priority to Chinese Patent Application No. 202111081626.6, filed in China on September 15, 2021, which is incorporated herein by reference in its entirety.

### TECHNICAL FIELD

This application pertains to the field of communication technologies, and specifically relates to an information processing method and apparatus, a terminal, and a readable storage medium.

### BACKGROUND

In existing networks, multi-card terminals are becoming increasingly common, and a multi-card terminal may have two or more SIM (Subscriber Identity Module, subscriber identity module) cards thereon. A multi-card terminal may encounter paging conflicts. Currently, it is still unclear how to reduce or solve paging conflicts while reducing influence on a network.

### SUMMARY

Embodiments of this application provide an information processing method and apparatus, a terminal, and a readable storage medium, which can reduce or solve paging conflicts while reducing influence on a network.

According to a first aspect, an embodiment of this application provides an information processing method, including: sending, by a terminal, a first message to a network-side device of a first network in a case that a first condition is satisfied.

Optionally, the first message includes at least one of the following: a request message for mobility registration update, a request message for location update, and a message capable of triggering the network-side device to update a temporary terminal identifier for the terminal and including neither request message for mobility registration update nor request message for location update.

The first condition includes one of the following: the terminal needs to be assigned with a new temporary terminal identifier, and the terminal needs to change a temporary terminal identifier.

According to a second aspect, an embodiment of this application provides an information processing apparatus applied to a terminal and including a first execution module, where the first execution module sends a first message to a network-side device of a first network in a case that a first condition is satisfied.

The first message includes at least one of the following: a request message for mobility registration update, a request message for location update, and a message capable of triggering the network-side device to update a temporary terminal identifier for the terminal and including neither request message for mobility registration update nor request message for location update.

The first condition includes one of the following: the terminal needs to be assigned with a new temporary terminal identifier, and the terminal needs to change a temporary terminal identifier.

According to a third aspect, an embodiment of this application provides a terminal, where the communication terminal includes a processor, a memory, and a program or instructions stored in the memory and capable of running on the processor, and when the program or instructions are executed by the processor, the steps of the information processing method according to the first aspect are implemented.

According to a fourth aspect, an embodiment of this application provides a readable storage medium, where a program or instructions are stored in the readable storage medium, and when the program or instructions are executed by a processor, the steps of the method according to the first aspect are implemented.

According to a fifth aspect, an embodiment of this application provides a chip, the chip including a processor and a communication interface, where the communication interface is coupled to the processor, and the processor is configured to run a program or instructions to implement the steps of the method according to the first aspect.

According to a sixth aspect, an embodiment of this application provides a computer program/program product, where the computer program/program product is stored in a non-transitory storage medium, and the program/program product is executed by at least one processor to implement the steps of the method according to the first aspect.

According to a seventh aspect, a communication device is provided and configured to implement the steps of a data transmission method according to the first aspect.

In the embodiments of this application, when the terminal needs to be assigned with a new temporary terminal identifier, or the terminal needs to change a temporary terminal identifier, the terminal can initiate a first message to a network to obtain such new temporary terminal identifier, which can reduce or solve paging conflicts while reducing the influence on the network.

### BRIEF DESCRIPTION OF DRAWINGS

FIG. 1 is a block diagram of a wireless communication system to which embodiments of this application may be applicable;
FIG. 2 is a schematic flowchart of an information processing method according to an embodiment of this application;
FIG. 3 shows a schematic flowchart of a UE mobility registration procedure according to an embodiment of this application;
FIG. 4 is a schematic structural diagram of an information processing apparatus according to an embodiment of this application;
FIG. 5 is a schematic structural diagram of a communication device according to an embodiment of this application; and
FIG. 6 is a schematic structural diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not limit quantities of the objects. For example, there may be one or a plurality of first objects. In addition, "and/or" in the specification and claims represents at least one of connected objects, and the character "/" generally indicates that the associated objects have an "or" relationship.

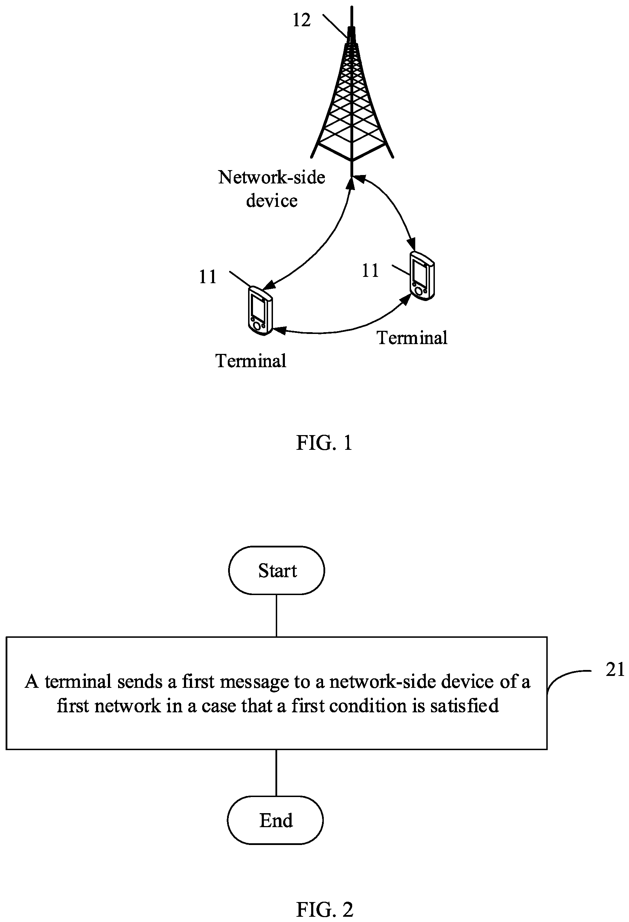

FIG. 1 is a block diagram of a wireless communication system to which the embodiments of this application may be applicable. The wireless communication system includes a terminal 11 and a network-side device 12. The terminal 11 may also be referred to as a terminal device, user equipment (User Equipment, UE), or a terminal, and the terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device) or vehicle user equipment (Vehicle User Equipment, VUE), or pedestrian user equipment (Pedestrian User Equipment, PUE). The wearable device includes a smart watch, a wrist band, earphones, glasses, or the like. It should be noted that the terminal 11 is not limited to a specific type in this embodiment of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a WLAN (Wireless Local Area Network, wireless local area network) access point, a Wi-Fi node, a transmitting receiving point (Transmitting Receiving Point, TRP), or other appropriate terms in the art. Provided that the same technical effects are achieved, the base station is not limited to any specific technical term. It should be noted that in this embodiment of this application, only the base station in the NR (New Radio, new radio) system is used as an example, although the specific type of the base station is not limited.

In an optional embodiment of this application, "can" may denote at least one of the following: allow, support, tend to have, and prefer to have a capability, and "cannot" may denote at least one of the following: not support, not allow, not tend to have, and not have a capability.

In an optional embodiment of this application, "obtaining" or "acquiring" may be understood as acquiring from configuration, receiving, receiving through a request, acquiring through self-learning, acquiring through deduction based on non-received information, or acquiring through processing based on received information, which may be determined according to actual needs. This is not limited in the embodiments of this application. For example, when specific capability indication information transmitted by a device is not received, it can be deduced that the device does not support the capability.

In an optional embodiment of this application, "sending" may include broadcasting, broadcasting through a system message, and returning a response to a request.

In an optional embodiment of this application, "separate" and "independent" may indicate the same meaning and may be used interchangeably.

In an optional embodiment of this application, a communication device may include at least one of the following: the network-side device (including a communication network element) and the terminal.

In an optional embodiment of this application, the communication network element may include at least one of the following: a core network network element and a radio access network network element.

In an optional embodiment of this application, the core network network element (CN network element) may be implemented as one of the following: a core network device, a core network communication device, a core network node, a core network function, and a core network unit. The core network network element, the core network device, the core network communication device, the core network node, the core network function, and/or the core network unit may include, but is not limited to, at least one of the following: a mobility management entity (Mobility Management Entity, MME), an access management function (Access Management Function, AMF), a session management function (Session Management Function, SMF), a user plane function (User Plane Function, UPF), a serving gateway (serving GW, SGW), a PDN gateway (PDN Gate Way, PDN gateway), a policy control function (Policy Control Function, PCF), a policy and charging rules function (Policy and Charging Rules Function, PCRF) unit, a serving GPRS support node (Serving GPRS Support Node, SGSN), a gateway GPRS support node (Gateway GPRS Support Node, GGSN), unified data management (Unified Data Management, UDM), a unified data repository (Unified Data Repository, UDR), a home subscriber server (Home Subscriber Server, HSS), and an application function (Application Function, AF).

In an optional embodiment of this application, the radio access network network element (CN network element) may be implemented as one of the following: a RAN (Radio Access Network, radio access network) device, a RAN communication device, a RAN node, a RAN function, and a RAN unit. The RAN network element, the RAN device, the RAN communication device, the RAN node, and/or the RAN function may include, but is not limited to, at least one of the following: a 3GPP (3rd Generation Partnership Project, 3rd generation partnership project) radio access network, a non-3GPP radio access network, a centralized unit (Centralized Unit, CU), a distributed unit (Distributed Unit, DU), a base station, an evolved Node B (evolved Node B, eNB), a 5G base station (gNB), a radio network controller (Radio Network Controller, RNC), a base station (NodeB), a non-3GPP interworking function (Non-3GPP Inter Working Function, N3IWF), an access controller (Access Controller, AC) node, an access point (Access Point, AP) device, a wireless local area network (Wireless Local Area Networks, WLAN) node, and an N3IWF.

In the related arts, there is a scenario where a temporary terminal identifier of a terminal is to be changed. For example, in a case that the temporary terminal identifier is used to generate a paging frame and/or a paging occasion related to the terminal, the paging frame and/or the paging occasion related to the terminal can be changed by changing the temporary terminal identifier. In a scenario where the terminal has a plurality of subscribers (for example, a plurality of USIMs (Universal Subscriber Identity Module, universal subscriber identity module)) and radio frequency resources cannot satisfy simultaneous activation of the plurality of subscribers, changing the temporary terminal identifier can prevent a paging conflict on a network where two or more subscribers camp (for example, after a paging frame and/or a paging occasion is changed, paging frames and/or paging occasions do not conflict).

Generally, a mobility registration procedure supports triggering the network-side device to assign a new temporary terminal identifier to the terminal. Triggering the mobility registration procedure can satisfy the need of the terminal to obtain the new temporary terminal identifier.

In an optional embodiment of this application, a network is a mobile communication network.

In an optional embodiment of this application, a subscriber may be understood as UE, and a terminal having a plurality of subscribers may be represented as a plurality of UEs.

In an optional embodiment of this application, the user or subscriber is a subscriber. Generally, one subscriber corresponds to one set of certificates. A subscriber is represented as UE. It is easy to understand that in a case that a terminal device has a plurality of subscribers, it may be represented as a plurality of UEs.

In an optional embodiment of this application, a terminal user identifier may be a user equipment identifier (UE identity).

In an optional embodiment of this application, the temporary terminal identifier includes a temporary terminal user identifier and a temporary UE identifier.

In an optional embodiment of this application, a request message for mobility registration update includes a request message for mobility and periodic registration update.

The following describes in detail an information processing method according to the embodiments of this application through some embodiments and application scenarios thereof with reference to the accompanying drawings.

Refer to FIG. 2. FIG. 2 is a flowchart of an information processing method according to an embodiment of this application, where the method is applied to a terminal (UE). As shown in FIG. 2, the method includes the following step.

Step 21: The terminal sends a first message to a network-side device of a first network in a case that a first condition is satisfied.

Optionally, the first message includes at least one of the following: a request message for mobility registration update, a request message for location update, and a message capable of triggering the network-side device to update a temporary terminal identifier for the terminal and including neither request message for mobility registration update nor request message for location update.

The first condition includes one of the following: the terminal needs to be assigned with a new temporary terminal identifier, and the terminal needs to change a temporary terminal identifier.

Optionally, the first condition further includes at least one of the following:
the terminal camps on the first network;
the terminal has been registered with the first network;
the first network is a 5G system 5GS; and
a paging conflict occurs on the terminal.

It should be noted that the terminal having been registered with the first network may be understood as the terminal is in a mobility management registered (MM-REGISTERED) state on the first network. For example, in a case that the first network is a 5GS, the terminal is in a 5GMM-REGISTERED state on the first network.

Optionally, the network-side device includes a core network communication device.

Optionally, the core network communication device includes a network device configured for access and/or mobility control.

Optionally, the temporary terminal identifier includes at least one of the following: a 5G globally unique temporary identity (5G-Globally Unique Temporary Identifier, 5G GUTI) 5G GUTI and a globally unique temporary identity (Globally Unique Temporary Identifier, GUTI).

In an embodiment, the temporary terminal identifier is a terminal identifier assigned to the terminal by a network after the terminal is registered with the network.

In an embodiment, the request message for mobility registration update includes a registration request message, and a registration type in the registration request message is mobility registration.

In an embodiment, the temporary terminal identifier is used to generate a paging frame PF (Paging Frame) and/or a paging occasion PO (Paging Occasion) related to the terminal.

In an embodiment, the first message is a NAS (Non-Access Stratum) non-access stratum message.

In an embodiment, the terminal includes UE.

It is easy to understand that, according to this embodiment, in a case that a new paging terminal identifier is required, a new temporary identifier can be obtained with minimal network influence, preventing a paging conflict on a network where two or more subscribers camp.

For ease of understanding, the following description is with reference to specific embodiments.

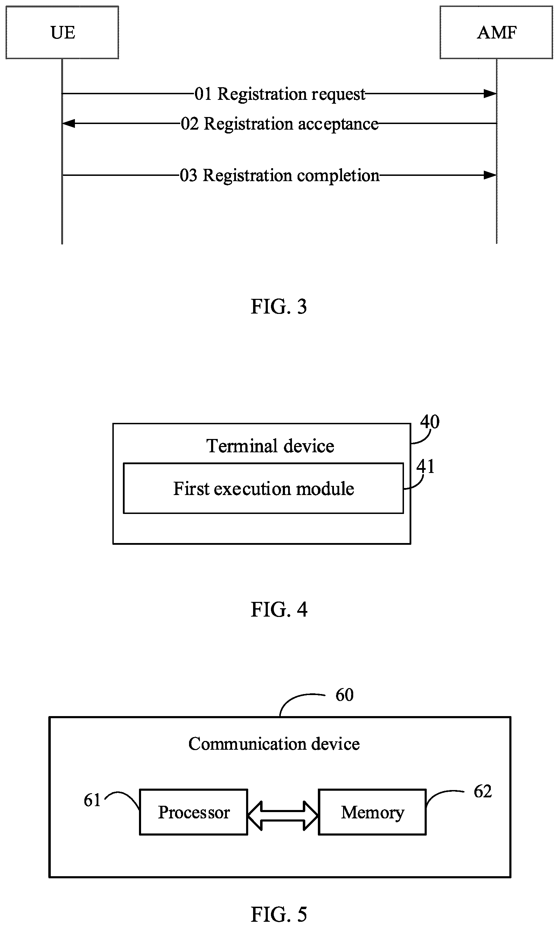

As shown in FIG. 3, a mobility registration procedure triggered by a related terminal may include the following steps.

Step 01: The terminal sends a request message for mobility registration update to a network-side device (an AMF is used as an example hereinafter for description) in a case that the terminal needs to be assigned with a new temporary terminal identifier or the terminal needs to change a temporary terminal identifier.

Step 02: The AMF assigns the new temporary terminal identifier to the terminal after receiving the request message for mobility registration update. The AMF sends a mobility registration acceptance message to the terminal. The mobility registration acceptance message includes the new temporary terminal identifier.

Step 03: Optionally, the terminal sends a mobility registration completion message to the AMF.

It should be noted that an information processing method according to this embodiment of this application may be performed by an information processing apparatus or a control module in the information processing apparatus configured to perform the information processing method. This embodiment of this application uses the information processing apparatus performing the information processing method as an example to describe the information processing apparatus according to this embodiment of this application.

Refer to FIG. 4. FIG. 4 is a schematic structural diagram of an information processing apparatus according to an embodiment of this application, where the apparatus is applied to a terminal. As shown in FIG. 4, the information processing apparatus 40 includes:
a first execution module 41 configured to send a first message to a network-side device of a first network in a case that a first condition is satisfied.

The first message includes at least one of the following: a request message for mobility registration update, a request message for location update, and a message capable of triggering the network-side device to update a temporary terminal identifier for the terminal and including neither request message for mobility registration update nor request message for location update.

The first condition includes one of the following: the terminal needs to be assigned with a new temporary terminal identifier, and the terminal needs to change a temporary terminal identifier.

Optionally, the apparatus 40 further includes a receiving module, where the receiving module is configured to receive the new temporary terminal identifier assigned by the network-side device.

Optionally, the first condition further includes at least one of the following:
the terminal camps on the first network;
the terminal has been registered with the first network;
the first network is a 5GS; and
a paging conflict occurs on the terminal.

Optionally, the network-side device includes a core network communication device. The core network communication device includes a network device configured for access and/or mobility control.

Optionally, the temporary terminal identifier includes at least one of the following: a 5G GUTI and a GUTI.

In this embodiment of this application, the information processing apparatus 40 can implement the processes implemented in the method embodiment shown in FIG. 2 of this application, with the same beneficial effects achieved. To avoid repetition, details are not described herein again.

Optionally, as shown in FIG. 5, an embodiment of this application further provides a communication device 60, including a processor 61, a memory 62, and a program or instructions stored in the memory 62 and capable of running on the processor 61. When the program or instructions are executed by the processor 61, the processes of the foregoing information processing method embodiment are implemented, with the same technical effects achieved. To avoid repetition, details are not described herein again.

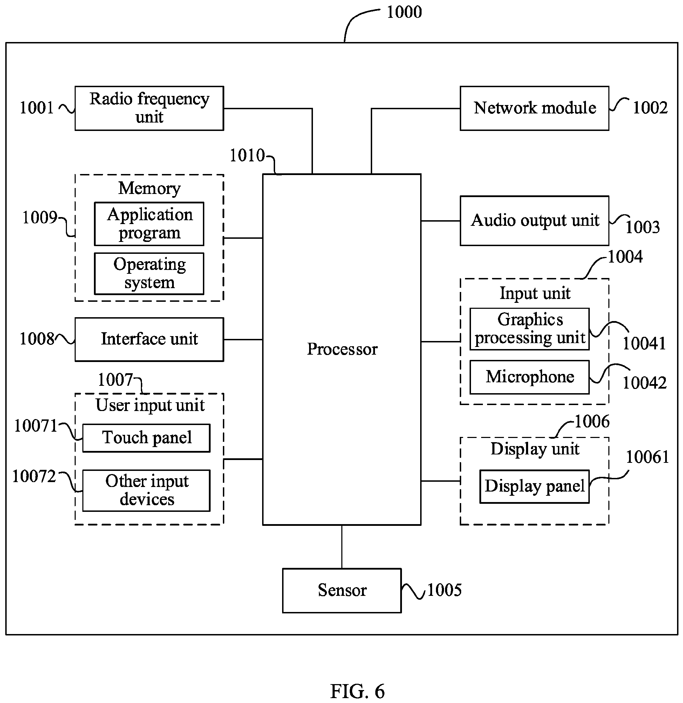

Specifically, FIG. 6 is a schematic diagram of a hardware structure of a communication terminal 1000 according to an embodiment of this application.

The communication terminal 1000 includes, but is not limited to, at least some of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the communication terminal 1000 may further include a power supply (for example, a battery) supplying power to the components. The power supply may be logically connected to the processor 1010 via a power management system, so that functions such as charge management, discharge management, and power consumption management are implemented by using the power management system. The structure of the terminal shown in FIG. 6 does not constitute any limitation on the terminal. The terminal may include more or fewer components than illustrated in the figure, or combine some components, or have different arrangements of the components. Details are not described herein.

It should be understood that in this embodiment of this application, the input unit 1004 may include a graphics processing unit (Graphics Processing Unit, GPU) 10041 and a microphone 10042. The graphics processing unit 10041 processes image data of a static picture or a video that is obtained by an image capture apparatus (for example, a camera) in a video capture mode or an image capture mode. The display unit 1006 may include a display panel 10061. The display panel 10061 may be configured in a form of a liquid crystal display, an organic light-emitting diode display, or the like. The user input unit 1007 includes a touch panel 10071 and other input devices 10072. The touch panel 10071, is also referred to as a touchscreen. The touch panel 10071 may include two parts: a touch detection apparatus and a touch controller. The other input devices 10072 may include, but are not limited to, a physical keyboard, a function button (for example, a volume control button or a power button), a trackball, a mouse, and a joystick. Details are not described herein.

In this embodiment of this application, the radio frequency unit 1001 sends downlink data received from a network-side device to the processor 1010 for processing, and in addition, sends uplink data to the network-side device. Generally, the radio frequency unit 1001 includes, but is not limited to, an antenna, at least one amplifier, a transceiver, a coupler, a low noise amplifier, and a duplexer.

The memory 1009 may be configured to store software programs or instructions and various data. The memory 1009 may mainly include a program or instruction storage area and a data storage area. The program or instruction storage area may store an operating system, an application program or instructions required by at least one function (for example, a sound play function or an image play function), and the like. In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or another non-volatile solid-state storage device.

The processor 1010 may include one or more processing units. Optionally, the processor 1010 may integrate an application processor and a modem processor. The application processor mainly processes an operating system, a user interface, application programs or instructions, and the like. The modem processor mainly processes wireless communication, for example, being a baseband processor. It can be understood that the modem processor may alternatively be not integrated in the processor 1010.

The processor 1010 is configured to send a first message to the network-side device of a first network in a case that a first condition is satisfied.

The first message includes at least one of the following: a request message for mobility registration update, a request message for location update, and a message capable of triggering the network-side device to update a temporary terminal identifier for the terminal and including neither request message for mobility registration update nor request message for location update.

The first condition includes one of the following: the communication terminal needs to be assigned with a new temporary terminal identifier, and the communication terminal needs to change a temporary terminal identifier.

Optionally, the first condition further includes at least one of the following:
the terminal camps on the first network;
the terminal has been registered with the first network;
the first network is a 5G system 5GS; and
a paging conflict occurs on the terminal.

Optionally, the network-side device includes a core network communication device. Optionally, the core network communication device includes a network device configured for access and/or mobility control.

Optionally, the temporary terminal identifier includes at least one of the following: a 5G GUTI or a GUTI.

According to this embodiment, in a case that a new paging terminal identifier is required, a new temporary identifier can be obtained with minimal network influence, preventing a paging conflict on a network where two or more subscribers camp.

An embodiment of this application further provides a readable storage medium, where the readable storage medium has a program or instructions stored thereon. When the program or instructions are executed by a processor, the processes of the foregoing information processing method embodiment are implemented, with the same technical effects achieved. To avoid repetition, details are not described herein again.

The processor is the processor in the terminal in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or instructions to implement the processes of the foregoing information processing method embodiment, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that in this specification, the terms "include" and "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more restrictions, an element preceded by the statement "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

According to the descriptions of the foregoing embodiments, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network-side device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An information processing method, comprising:
sending, by a terminal, a first message to a network-side device of a first network in a case that a first condition is satisfied, wherein
the first message comprises at least one of the following: a request message for mobility registration update, a request message for location update, and a message capable of triggering the network-side device to update a temporary terminal identifier for the terminal and comprising neither request message for mobility registration update nor request message for location update; and
the first condition comprises one of the following: the terminal needs to be assigned with a new temporary terminal identifier, and the terminal needs to change a temporary terminal identifier.

2. The method according to claim 1, wherein the first condition further comprises at least one of the following:
the terminal camps on the first network;
the terminal has been registered with the first network;
the first network is a 5G system 5GS; and
a paging conflict occurs on the terminal.

3. The method according to claim 1, wherein the network-side device comprises a core network communication device.

4. The method according to claim 3, wherein the core network communication device comprises a network device configured for access and/or mobility control.

5. The method according to any one of claims 1 to 4, wherein the temporary terminal identifier comprises at least one of the following: a 5G globally unique temporary identity 5G GUTI and a globally unique temporary identity GUTI.

6. An information processing apparatus, applied to a terminal and comprising:
a first execution module configured to send a first message to a network-side device of a first network in a case that a first condition is satisfied, wherein
the first message comprises at least one of the following: a request message for mobility registration update, a request message for location update, and a message capable of triggering the network-side device to update a temporary terminal identifier for the terminal and comprising neither request message for mobility registration update nor request message for location update; and
the first condition comprises one of the following: the terminal needs to be assigned with a new temporary terminal identifier, and the terminal needs to change a temporary terminal identifier.

7. The apparatus according to claim 6, wherein the first condition further comprises at least one of the following:
the terminal camps on the first network;
the terminal has been registered with the first network;
the first network is a 5GS; and
a paging conflict occurs on the terminal.

8. The apparatus according to claim 6, wherein the network-side device comprises a core network communication device.

9. The apparatus according to claim 8, wherein the core network communication device comprises a network device configured for access and/or mobility control.

10. The apparatus according to any one of claims 6 to 9, wherein the temporary terminal identifier comprises at least one of the following: a 5G globally unique temporary identity 5G GUTI and a globally unique temporary identity GUTI.

11. A communication terminal, comprising a processor, a memory, and a program or instructions stored in the memory and capable of running on the processor, wherein when the program or instructions are executed by the processor, the steps of the information processing method according to any one of claims 1 to 5 are implemented.

12. A readable storage medium, wherein the readable storage medium has a program or instructions stored thereon, and when the program or instructions are executed by a processor, the steps of the information processing method according to any one of claims 1 to 5 are implemented.

13. A chip, comprising a processor and a communication interface, wherein the communication interface is coupled to the processor, and the processor is configured to run a program or instructions to implement the steps of the information processing method according to any one of claims 1 to 5.

14. A computer program product, wherein the program product is stored in a non-volatile storage medium, and the program product is executed by at least one processor to implement the steps of the information processing method according to any one of claims 1 to 5.

15. A communication device, configured to implement the steps of the information processing method according to any one of claims 1 to 5.
